Europäisches Patentamt

European Patent Office

Office européen des brevets

(11) Veröffentlichungsnummer: **0 372 164**
**A2**

(12) **EUROPÄISCHE PATENTANMELDUNG**

(21) Anmeldenummer: 89114793.6

(22) Anmeldetag: 10.08.89

(51) Int. Cl.⁵: **F27B 9/24, F27D 5/00**

(30) Priorität: 09.12.88 DE 3841447

(43) Veröffentlichungstag der Anmeldung:
13.06.90 Patentblatt 90/24

(84) Benannte Vertragsstaaten:
AT BE CH DE FR GB IT LI NL SE

(71) Anmelder: HERAEUS QUARZSCHMELZE GMBH
Quarzstrasse
D-6450 Hanau(DE)

(72) Erfinder: Dieudonné, Walter
Neue Strasse 14
D-8755 Kälberau(DE)
Erfinder: Mittelstädt, Norbert
Gerhart-Hauptmann-Strasse 4
D-6450 Hanau(DE)
Erfinder: Reul, Kurt
Weiherstrasse 1
D-6466 Gründau 4(DE)

(74) Vertreter: Heinen, Gerhard, Dr.
Heraeus Holding GmbH Zentralbereich
Patente und Lizenzen Heraeusstrasse 12-14
D-6450 Hanau am Main(DE)

(54) Durchlaufofen, insbesondere zum Anlöten von elektronischen Beauteilen.

(57) Es sind Durchlauföfen mit Wärmestrahlern, insbesondere elektrischen Infrarotstrahlern, zur Wärmebehandlung von dünnen, plattenförmigen Teilen, insbesondere von mit elektronischen Bauteilen bestückten Leiterplatten, mit einer Transportvorrichtung bekannt, die zwei mit Abstand parallel zueinander verlaufende synchron angetriebene endlose Antriebsbänder mit jeweils Auflageelementen für die plattenförmigen Teile aufweisen. Um einen Durchlaufofen mit einer Transportvorrichtung anzugeben, bei dem die zu verlötenden Leiterplatten in einer definierten Ebene über ihre gesamte Baulänge durch den Ofen hindurchgeführt werden, ohne daß durch die damit verbundene konstruktive Maßnahme die Wärmeverhältnisse im Ofen stark beeinflußt werden, ist zwischen den beiden Antriebsbändern parallel zu diesen ein Hilfs-Antriebsband angeordnet, das gegebenenfalls Vorsprünge aufweist, die senkrecht zur Bandflaufebene, die durch die Antriebsbänder aufgespannt wird, weisen, deren Länge die durch die Auflageelemente aufgespannte Auflageebene für die plattenförmigen Teile nicht überragt.

## Durchlaufofen, insbesondere zum Anlöten von elektronischen Bauteilen

Die vorliegende Anmeldung betrifft einen Durchlaufofen mit Wärmestrahlern, insbesondere elektrischen Infrarotstrahlern, zur Wärmebehandlung von dünnen, plattenförmigen Teilen, insbesondere von mit elektronischen Bauteilen bestückten Leiterplatten, mit einer Transportvorrichtung, die zwei mit Abstand parallel zueinander verlaufende synchron angetriebene endlose Antriebsbänder mit jeweils Auflageelementen für die plattenförmigen Teile aufweist.

Solche Durchlauföfen, die auch als Infrarot-Durchlauföfen für die Oberflächenmontage von SMD-Bauteilen (Surface Mounted Device) bezeichnet werden, sind allgemein bekannt und beispielsweise in der Produktinformation "INFRADRY CM", Infrarot-Durchlauföfen, Problemlösungen für die SMD-Technik, PIR-B 114 (5C 10.87/N Ku) der Heraeus Quarzschmelze GmbH INFRAROT beschrieben. Diese Öfen weisen ein Transportband auf, auf das Leiterplatten aufgelegt werden, um sie durch den Ofen zu fahren. Diese Transportbänder weisen zwei parallel zueinander verlaufende endlose Antriebsbänder in Form von Gliederketten auf, wobei die Auflageelemente für die Leiterplatten durch horizontale Stifte, die gleichzeitig Gelenkachsen dieser Gliederkette bilden und nach innen über die Gliederkette vorstehend verlängert sind, gebildet werden. Die Führungsketten werden über Zahnräder angetrieben und entlang ihrer Länge durch Führungsstränge abgestützt. Diese Durchlauföfen können eine Baulänge von einigen Metern aufweisen. Oberhalb und/oder unterhalb dieses Transportbandes sind Infrarot-Strahler angeordnet in Form von Röhren oder Heizplatten, um die mit elektronischen Bauteilen bestückten Leiterplatten zu verlöten. Die Beheizung der Durchlauföfen ist in mehrere Heizzonen unterteilt, die mit unterschiedlichen Heizleistungen betrieben werden, um das Lot zum Anlöten der Bauteile auf die erforderliche Löttemperatur zunächst kontinuierlich aufzuheizen und dann anzulöten. Im Bereich der Lötstation werden sehr hohe Temperaturen erreicht, da die erforderliche Löttemperatur für Lötzinn bei etwa 180°C bis 185°C liegt. Die Abmessungen der Leiterplatten, die auf die Antriebsbänder aufgelegt und durch den Durchlaufofen gefahren werden, können bis zu 500 mm haben. Für ein gleichmäßiges Aufheizen der zu verlötenden Bereiche der Leiterplatten ist es wesentlich, daß die Leiterplatten exakt durch den Ofen hindurchgeführt werden.

Alternativ zu den vorstehend beschriebenen Gliederketten als Transportmittel können sogenannte Drahtgliederbände eingesetzt werden, auf denen die zu verlötenden Leiterplatten flächig aufgelegt werden. Solche Drahtgliederbände besitzen einzelne am Rand miteinander verkettete Metallstäbe, die in einem Abstand von etwa 10 mm bis 15 mm zueinander verlaufen. Durch die Vielzahl der Stäbe dieser Drahtgliederkette werden die Wärmezonen stark beeinflußt. Der Vorteil solcher Drahtgliederketten ist aber darin zu sehen, daß die Leiterplatten schwingungsfrei und in einer genau definierten Ebene durch den Lötofen hindurchgeführt werden.

Der vorliegenden Erfindung liegt nun die Aufgabe zugrunde, einen Durchlaufofen mit einer Transportvorrichtung anzugeben, bei dem die zu verlötenden Leiterplatten in einer definierten Ebene über ihre gesamte Baulänge durch den Ofen hindurchgeführt werden, ohne daß durch die damit verbundene konstruktive Maßnahme die Wärmeverhältnisse im Ofen stark beeinflußt werden.

Gelöst wird diese Aufgabe dadurch, daß zwischen den beiden Antriebsbändern parallel zu diesen ein Hilfs-Antriebsband angeordnet ist, das Vorsprünge aufweist, die senkrecht zur Bandlaufebene, die durch die Antriebsbänder aufgespannt wird, weisen, deren Länge die durch die Auflageelemente aufgespannte Auflageebene für die plattenförmigen Teile nicht überragt. Durch das Hilfs-Antriebsband werden die Leiterplatten auf ihrer Unterseite definiert unterstützt, so daß ein Durchbiegen verhindert wird. Eine solche Transportvorrichtung eignet sich bevorzugt für einseitig bestückte Leiterplatten, die dann mit ihrer mit dem Bauteil bestückten Seite nach oben gerichtet auf die Auflageelemente der Antriebsbänder aufgelegt werden. Das Hilfs-Antriebsband wird bevorzugt über dieselben Antriebseinheiten wie die äußeren Antriebsbänder angetrieben, so daß ein synchroner Antrieb zwischen dem Hilfs-Antriebsband und den Antriebsbändern gewährleistet ist. Durch die einzelnen Vorsprünge des Hilfs-Antriebsbandes wird die Leiterplatte in ihrem Mittelbereich nur punktförmig unterstützt, so daß der Wärmefluß praktisch nicht behindert bzw. beeinflußt wird. Um zu gewährleisten, daß die Leiterplatten trotz der durch die Vorsprünge des Hilfs-Antriebsbandes gebildeten Mittelunterstützung auf den äußeren Auflageelementen aufliegen, sollten die Vorsprünge des Hilfs-Antriebsbandes die durch die Auflageelemente aufgespannte Auflageebene nicht überragen. Sie können bis zu 3 mm unterhalb der Auflageebenen enden, so daß die Leiterplatten, falls sie ausreichend stabil sind, frei über diesen Vorsprüngen schwebend durch den Durchlaufofen hindurchgefahren werden beziehungsweise, falls sie sich durchbiegen, unmittelbar auf den Vorsprüngen des Hilfs-Antriebsbandes zur Auflage kommen, so daß ein weiteres Durchbiegen verhindert wird.

Bevorzugt werden die Vorsprünge, die von dem Hilfs-Antriebsband vorstehen, in Laufrichtung des Antriebsbandes gesehen, etwa 5 mm bis 50 mm zueinander beabstandet, so daß die Leiterplatten, ungeachtet der jeweiligen Position dieser Vorsprünge, auf das Transportband aufgelegt werden können. Als Vorsprünge können Noppen oder Stifte dienen, die bevorzugt einen Durchmesser von 2 mm bis 5 mm aufweisen sollten, so daß sie die Leiterplatten an der Unterseite punktförmig lagern. Alternativ zu solchen Noppen oder Stiften können die Vorsprünge durch wellenförmige Erhebungen auf dem Hilfs-Antriebsband gebildet werden, wobei in Verbindung mit solchen wellenförmigen Erhebungen ein Band aus temperaturbeständigem Kunststoff, z.B. Polytetrafluoräthylen eingesetzt wird, das einfach herstellbar beziehungsweise einfach profilierbar ist. Das Hilfs-Antriebsband kann aber auch, ähnlich den Haupt-Antriebsbändern, eine Gliederkette sein mit einzelnen Gliedern, an denen die Noppen oder Stifte fest angeordnet sind.

Üblicherweise kann bei solchen Durchlauföfen der Abstand der beiden Haupt-Antriebsbänder zueinander verstellt werden, um diesen Abstand auf die jeweilige günstige Position der zu behandelnden Leiterplatten einzustellen. Da das Hilfs-Antriebsband jeweils mittig zwischen den beiden Haupt-Antriebsbändern angeordnet sein soll, um die Leiterplatten exakt in ihrer Mitte, also symmetrisch, gegen ein Durchbiegen abzustützen, ist eine Anordnung des Hilfs-Antriebsbandes von Vorteil, in der dieses Hilfs-Antriebsband derart verstellbar ist, daß es sich mit der halben Geschwindigkeit verschiebt, mit der sich ein verschiebbar angeordnetes Haupt-Antriebsband verstellt.

Ein Ausführungsbeispiel der Erfindung wird anhand der nachfolgenden Zeichnung näher erläutert.

In der Zeichnung zeigt

Figur 1a eine Draufsicht auf das Transportband eines erfindungsgemäßen Durchlaufofens mit einem Hilfs-Antriebsband,

Figur 1b eine Seitenansicht des Transportbandes nach Figur 1a,

Figur 2 einen Schnitt entlang der Schnittlinie 11-11 in Figur 1, und

Figuren 3 bis 7 verschiedene Beispiele für Hilfs-Antriebsbänder.

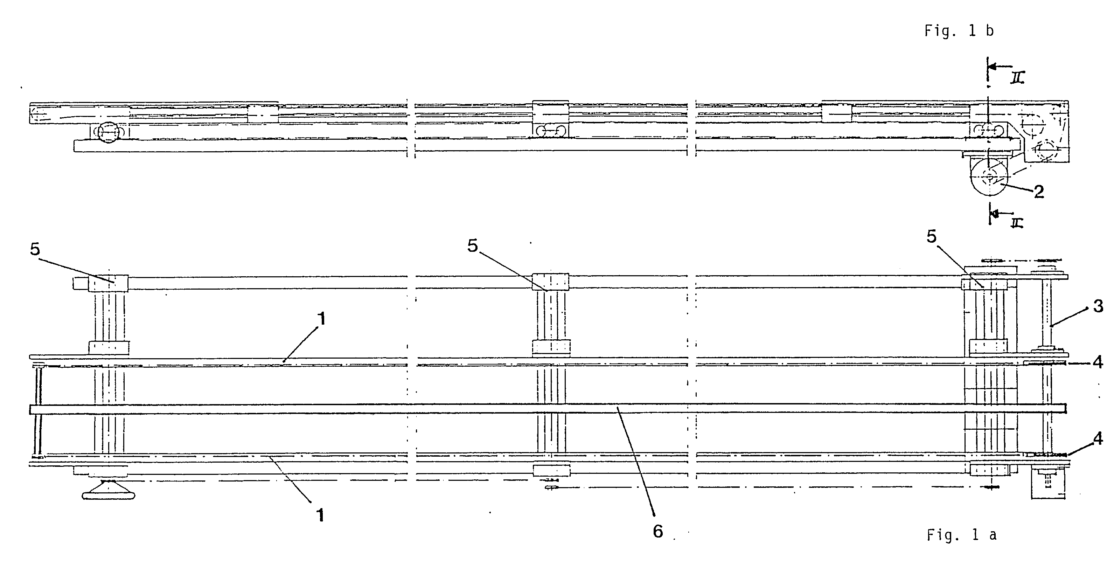

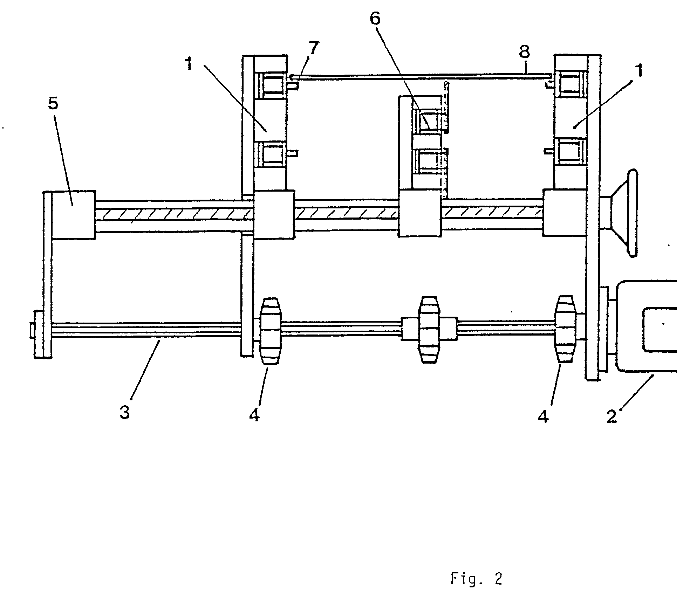

Die Transportvorrichtung, wie sie in Figur 1 zu sehen ist, besitzt zwei Haupt-Antriebsbänder 1, die als endlose Gliederketten ausgeführt sind und parallel zueinander verlaufen. Diese Antriebsbänder 1 werden über einen Antriebsmotor 2 angetrieben, auf dessen Welle 3 zwei Zahnräder 4 drehfest angeordnet sind, über die jeweils das eine beziehungsweise das andere Antriebsband läuft. Die beiden Antriebsbänder 1 sind über ihre Länge über Führungseinheiten 5 geführt. Zwischen den beiden Antriebsbändern 1 verläuft ein Hilfs-Antriebsband 6, das über die Welle 3 angetrieben wird. Wie in der Figur 2 schematisch angedeutet ist, weisen die Haupt-Antriebsbänder 1 stiftförmige Auflageelemente 7 auf, die einander zugewandt sind und an der Oberseite der Transportvorrichtung eine Auflageebene für Leiterplatten 8 bilden. Auf diesen Auflageelementen 7 liegen die Leiterplatten 8 lose auf, ohne daß sie seitlich an den Seitenrändern verklemmt werden. Das Hilfs-Antriebsband 6 ist zwischen den beiden Haupt-Antriebsbändern 1 auf der Welle 3 angeordnet, wobei die Welle 3 als Keilwelle ausgebildet ist.

Das Hilfs-Antriebsband 6 weist auf seiner Oberseite Stifte oder Noppen 9, die als Mittelunterstützung für die Leiterplatten 8 dienen. Wie in Figur 2 zu erkennen ist, enden die Stifte 9 geringfügig unterhalb der durch die Auflageelemente 7 aufgespannten Auflageebene für die Leiterplatten 8, d. h. sie enden in geringem Abstand zu der Unterseite der Leiterplatten. Diese Leiterplatten können beidseitig mit elektrischen oder elektronischen Bauelementen bestückt sein. Der Abstand zwischen dem Ende der Stifte 9 und der Unterseite der Leiterplatten 8 beträgt etwa 1 mm. Falls sich die Leiterplatten beim Anlöten der Bauteile derart stark erwärmen, daß sie sich durchbiegen, kommen sie an den Stiften 9 zur Anlage und werden abgestützt.

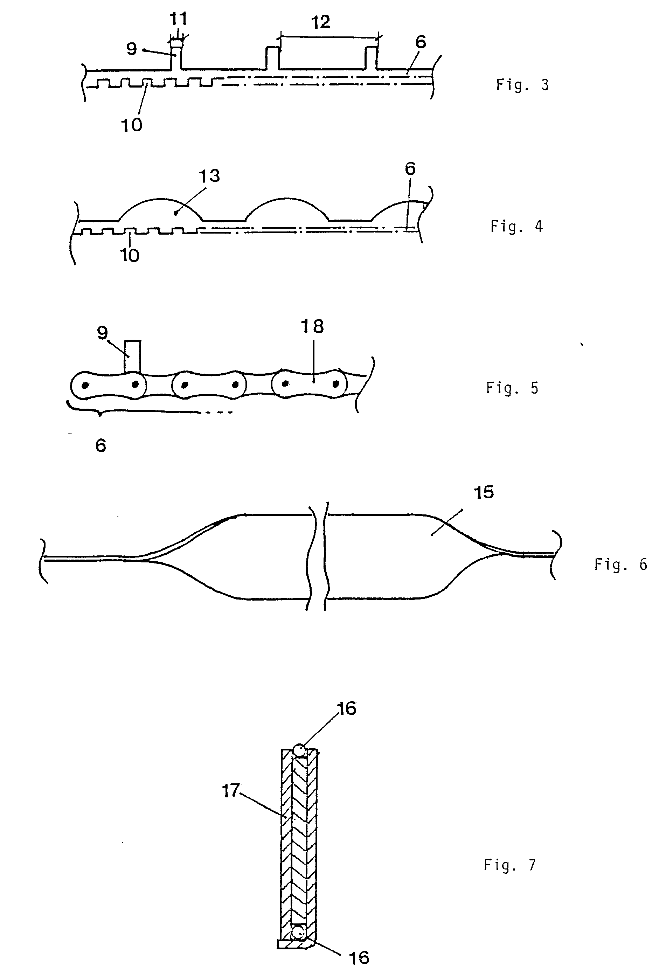

In den Figuren 3 bis 7 sind verschiedene Ausführungen des Hilfs-Antriebsbandes 6 gezeigt, wobei Figur 5 eine Gliederkette zeigt, während die Figuren 3 und 4 Antriebsbänder oder Antriebsriemen in Form von temperaturbeständigen Bändern zeigen, die profiliert sind. Das in Figur 3 gezeigte Band besitzt an seiner Unterseite eine Zahnung 10, während an der Oberseite die Noppen 9 vorstehen. Diese Noppen 9 besitzen einen Durchmesser, durch das Bezugszeichen 11 angedeutet, von 4 mm, der mittlere Abstand 12 zwischen zwei benachbarten Noppen 9 beträgt etwa 20 mm. Das Band, wie es die Figur 4 zeigt, ist auf seiner Oberseite wellenförmig profiliert, so daß die Vorsprünge beziehungsweise Erhebungen 13, gegen die sich die Leiterplatten 8 anlegen, durch Wellenkämme gebildet sind. Die Gliederkette der Figur 5 weist entsprechend der Profilierung des Teflonbandes nach Figur 3 ebenfalls Stifte 9 auf, die an einzelnen Gliedern 14 der Gliederkette nach oben stehend angeordnet sind.

Figur 6 zeigt eine Mittelunterstützung, die durch ein senkrecht verlaufendes Metallband ausgeführt ist. Die Dicke des Bandes 15 beträgt maximal 1 mm. Das Band 15 wird über Richtrollen am Anfang in eine senkrechte Position gebracht und am Ende wieder in eine waagrechte Position zurückgeführt, um eine Umlenkung zu ermöglichen.

Figur 7 zeigt die Möglichkeit der Leiterplattenunterstützung mit Hilfe eines Seiles 26 über ein Führungsschwert 17 abgestützt ist.

**Ansprüche**

1. Durchlaufofen mit Wärmestrahlern, insbesondere elektrischen Infrarotstrahlern, zur Wärmebehandlung von dünnen, plattenförmigen Teilen, insbesondere von mit elektronischen Bauteilen bestückten Leiterplatten, mit einer Transportvorrichtung, die zwei mit Abstand parallel zueinander verlaufende synchron angetriebene endlose Antriebsbänder mit jeweils Auflageelementen für die plattenförmigen Teile aufweist, dadurch gekennzeichnet, daß zwischen den beiden Antriebsbändern (1) parallel zu diesen ein Hilfs-Antriebsband (6) angeordnet ist, das gegebenenfalls Vorsprünge (9) aufweist, die senkrecht zur Bandlaufebene, die durch die Antriebsbänder (1) aufgespannt wird, weisen, deren Länge die durch die Auflageelemente aufgespannte Auflageebene für die plattenförmigen Teile (8) nicht überragt.

2. Durchlaufofen nach Anspruch 1, dadurch gekennzeichnet, daß die Vorsprünge (9) maximal 3 mm unterhalb der Auflageebene enden.

3. Durchlaufofen nach Anspruch 1 oder 2, dadurch gekennzeichnet, daß die Vorsprünge (9) in Laufrichtung der Antriebsbänder (1, 6) gesehen 5 mm bis 50 mm zueinander beabstandet sind.

4. Durchlaufofen nach einem der Ansprüche 1 bis 3, dadurch gekennzeichnet, daß die Vorsprünge Noppen oder Stifte (9) sind.

5. Durchlaufofen nach Anspruch 4, dadurch gekennzeichnet, daß die Noppen der Stifte (9) einen Durchmesser von 2 bis 5 aufweisen.

6. Durchlaufofen nach einem der Ansprüche 1 bis 3, dadurch gekennzeichnet, daß die Vorsprünge durch wellenförmige Erhebungen (13) gebildet sind.

7. Durchlaufofen nach einem der Ansprüche 1 bis 6, daduruch gekennzeichnet, daß das Hilfs-Antriebsband (6) ein profiliertes Band aus temperaturbeständigem Kunststoff ist.

8. Durchlaufofen nach einem der Ansprüche 1 bis 6, dadurch gekennzeichnet, daß das Hilfs-Antriebsband (6) eine Gliederkette ist.

9. Durchlaufofen nach einem der Ansprüche 1 bis 8, dadurch gekennzeichnet, daß das Hilfs-Antriebsband (6) im Abstand zu den Antriebsbändern 1 verstellbar ist.

10. Durchlaufofen nach Anspruche 9, dadurch gekennzeichnet, daß mindestens eines der Antriebsbänder (1) im Abstand zu dem anderen Antriebsband (1) verstellbar ist, wobei das Hilfs-Antriebsband (6) gleichzeitig mit dem einen Antriebsband (1) verstellbar ist.

11. Durchlaufofen nach Anspruch 9, dadurch gekennzeichnet, daß das Hilfs-Antriebsband (6) sich mit der halben Geschwindigkeit dieses Antriebsbandes (1) verschiebt.

12. Durchlaufofen nach einem der Ansprüche 1 bis 11, dadurch gekennzeichnet, daß das Hilfs-Antriebsband (6) mittig zwischen den Antriebsbändern (1) verläuft.

13. Durchlaufofen nach einem der Ansprüche 1 bis 3, dadurch gekennzeichnet, daß das Hilfs-Antriebsband (6) ein flaches, hochstehendes Band (15) ist.

14. Durchlaufen nach einem der Ansprüche 1 bis 3, dadurch gekennzeichnet, daß das Hilfs-Antriebsband (6) ein umlaufendes Seil (16) ist.

Fig. 1 a

Fig. 1 b

Fig. 2

Fig. 3

Fig. 4

Fig. 5

Fig. 6

Fig. 7